# EUROPÄISCHE PATENTSCHRIFT

(11) **EP 3 714 337 B1**
(45) Veröffentlichungstag und Bekanntmachung des Hinweises auf die Patenterteilung: **13.10.2021**
(21) Anmeldenummer: 19720390.4
(22) Anmeldetag: 08.04.2019
(51) Int. Cl.: G05B 17/02

(54) **SIMULIEREN VON STATISTISCH MODELLIERTEN SENSORDATEN**
SIMULATION OF STATISTICALLY MODELLED SENSOR DATA
SIMULATION DE DONNÉES DE CAPTEUR MODÉLISÉES DE MANIÈRE STATISTIQUE

(30) Priorität: 13.04.2018 DE 102018205660
(43) Veröffentlichungstag der Anmeldung: 30.09.2020
(73) Patentinhaber: Siemens Mobility GmbH, 81739 München (DE)
(72) Erfinder: KETABDAR, Hamed, 10707 Berlin (DE); NOURANI-VATANI, Navid, 12489 Berlin (DE)
(86) Internationale Anmeldenummer: PCT/EP2019/058785
(87) Internationale Veröffentlichungsnummer: WO 2019/197324

(56) Entgegenhaltungen:
- EP-A1- 3 270 252
- US-A1- 2006 025 961
- US-A1- 2007 203 864
- US-A1- 2009 043 536

## Beschreibung

Die Erfindung betrifft eine Sensordaten-Simulationsvorrichtung. Weiterhin betrifft die Erfindung eine Trainingsvorrichtung. Überdies betrifft die Erfindung ein Verfahren zum Simulieren von Sensordaten. Außerdem betrifft die Erfindung ein Trainingsverfahren zum Trainieren einer Sensordaten-Simulationsvorrichtung.

Sensordaten aus dem laufenden Betrieb zu erhalten, kann sehr kompliziert und teuer sein, insbesondere in der Eisenbahnindustrie. Das Organisieren von Testläufen bringt eine Menge von frühzeitigen Planungsprozessen, hohen Kosten und technischen Komplikationen mit sich. Zudem ist es schwierig, sicherzustellen, dass ein Testlauf alle Umweltaspekte berücksichtigen kann, die einen Sensor beeinflussen können. Beispielsweise kann nicht garantiert werden, dass genügend Schnee oder überhaupt Schnee während eines anberaumten Testlaufs vorhanden ist, wenn die Funktionalität eines Sensors mit Wetterbedingungen, wie zum Beispiel Schnee, korreliert ist.

Aus den genannten Gründen ist es erforderlich, dass Sensormessungen auf Basis der physikalischen Gesetze simuliert werden können. Eine solche Vorgehensweise stellt sicher, dass eine höhere Variabilität in den Sensordaten beobachtet werden kann. Allerdings ist es nicht möglich, alle Parameter zu berücksichtigen, die das Verhalten eines Sensors und der Umgebung des Sensors beeinflussen, als physikalische Gesetze zu berücksichtigen, da beispielsweise eine Vielzahl physikalischer Simulationen berücksichtigt werden sollen.

In EP 3 270 252 A1 wird eine Fehlerprüfung mit Hilfe von simulierten Vergleichsdaten beschrieben, die mit Hilfe eines physikalischen Modells und eines statistischen Modells erzeugt werden.

In US 2006/ 0 025 961 A1 wird ein Verfahren zur Überwachung einer technischen Einrichtung veranschaulicht. Dabei wird die technische Einrichtung durch ein dynamisches Modell beschrieben. Das dynamische Modell wird auf Basis künstlicher Intelligenz an das Verhalten der technischen Einrichtung angepasst.

In US 2007/ 0 203 864 A1 wird die Simulierung eines virtuellen Sensorsystems mit Hilfe eines neuronalen Netzwerks beschrieben. Nach dem Trainingsprozess des neuronalen Netzwerks erfolgt eine Validierung des erzeugten Computermodells mit Hilfe von statistischen Daten.

Es besteht also die Aufgabe, eine Vorrichtung und ein entsprechendes Verfahren zu entwickeln, welche mit wenig Aufwand realistische Sensordaten liefern.

Diese Aufgabe wird durch eine Sensordaten-Simulationsvorrichtung gemäß Patentanspruch 1, durch eine Trainingsvorrichtung gemäß Patentanspruch 7, durch ein Verfahren zum kombinierten Simulieren von Sensordaten gemäß Patentanspruch und durch ein Trainingsverfahren gemäß Patentanspruch 11 gelöst.

Die erfindungsgemäße Sensordaten-Simulationsvorrichtung weist eine Physik-Engine zum Erzeugen von ersten simulierten Sensordaten auf Basis eines physikalischen Modells auf.

Ein physikalisches Modell beschreibt einen mathematischen Zusammenhang zwischen verschiedenen physikalischen Größen. Im engeren Sinn geht es bei dem erfindungsgemäßen Verfahren um eine mathematische Beschreibung des Zusammenhangs zwischen physikalischen Größen, die die Umwelteinflüsse auf einen betreffenden Sensor beschreiben, sowie den Sensor und dessen Antwortverhalten kennzeichnende physikalische Größen. Ein solches physikalisches Modell kann zum Beispiel durch eine Physik-Engine erzeugt werden. Die Physik-Engine berücksichtigt auch Einschränkungen und Randbedingungen in ihren verwendeten modellhaften Gleichungen. Beispielsweise wird die Dicke von Leitungen sowie die Länge der Leitungen dazu genutzt, um einen Wärmeverlust zu berechnen.

Teil der erfindungsgemäßen Sensordaten-Simulationsvorrichtung ist auch eine statistische Modelleinheit zum Erzeugen von zweiten simulierten Sensordaten auf Basis eines trainierten statistischen Modells, welches durch Trainieren mit echten Sensordaten gewonnen wurde und dazu eingerichtet ist, das zeitabhängige statistische Verhalten der echten Sensordaten wiederzugeben.

Ein trainiertes statistisches Modell soll in diesem Zusammenhang ein statistisches Modell umfassen, welches auf Basis eines Lernalgorithmus, beispielsweise eines maschinellen Lernverfahrens, erzeugt wird. Als statistisches Modell soll in diesem Zusammenhang ein Modell verstanden werden, welches eine zeitliche Variabilität der Sensorwerte statistisch beschreibt.

Indem die erfindungsgemäße Sensordaten-Simulationsvorrichtung modellhaft das statistische Verhalten der Sensordaten durch Lernen anhand von echten Sensordaten berücksichtigt, lassen sich simulierte Sensordaten erzeugen, die mit den Daten des physikalischen Modells eine gewisse Komplementarität aufweisen. Auf diese Weise können exaktere Sensordaten über einen größeren Parameterbereich erzeugt werden. Zudem kann ein aufwändiges Akquirieren von echten Testdaten durch die Simulation reduziert werden.

Indem die erfindungsgemäße Sensordaten-Simulationsvorrichtung modellhaft das statistische Verhalten der Sensordaten durch Lernen anhand von echten Sensordaten berücksichtigt, lassen sich simulierte Sensordaten erzeugen, die exakter dem tatsächlichen Verhalten der Sensoren entsprechen. Gleichzeitig kann durch die Einbindung des physikalischen Modells eine hohe Variabilität erzielt werden. Zudem kann ein aufwändiges Akquirieren von echten Testdaten durch die Simulation reduziert werden.

Weiterhin umfasst die erfindungsgemäße Sensordaten-Simulationsvorrichtung auch eine Fusionseinheit zum Erzeugen eines Satzes von kombinierten simulierten Sensordaten durch Kombination der ersten simulierten Sensordaten mit den zweiten simulierten Sensordaten unter Anwendung eines trainierten Kombinationsmodells auf die ersten simulierten Sensordaten und die zweiten simulierten Sensordaten, wobei das trainierte Kombinationsmodell durch Trainieren mit echten Sensordaten und simulierten ersten und zweiten Sensordaten gewonnen wurde.

Als trainiertes Kombinationsmodell soll ein Modell verstanden werden, welches auf Basis eines Lernalgorithmus, beispielsweise eines maschinellen Lernverfahrens, kombinierte simulierte Sensordaten erzeugt. Dabei erfolgt das Lernverfahren quasi als zweistufiges Lernverfahren. Denn für das Training des Kombinationsalgorithmus werden zunächst zweite simulierte Sensordaten benötigt, die ihrerseits wieder modellbasiert bzw. auf einem Lernalgorithmus basierend mit Hilfe von echten Sensordaten als Testdaten erzeugt wurden. Die im Rahmen des Lernprozesses durch Kombination erzeugten Sensordaten, können dann im Rahmen eines Matching-Prozesses zusammen mit den Testdaten zur Anpassung des Lernalgorithmus genutzt werden.

Indem die erfindungsgemäße Sensordaten-Simulationsvorrichtung modellhaft das statistische Verhalten der Sensordaten durch Lernen anhand von echten Sensordaten berücksichtigt, lassen sich simulierte Sensordaten erzeugen, die exakter dem tatsächlichen Verhalten der Sensoren entsprechen. Gleichzeitig kann durch die Einbindung des physikalischen Modells eine hohe Variabilität erzielt werden. Zudem kann ein aufwändiges Akquirieren von echten Testdaten durch die Simulation reduziert werden.

Die erfindungsgemäße Trainingsvorrichtung umfasst eine erste Schnittstelle zum Empfangen von zweiten simulierten Sensordaten, welche mit einem zu trainierenden statistischen Modell erzeugt werden, und eine Modelltrainingseinheit zum Trainieren des statistischen Modells mit echten Sensordaten und den über die erste Schnittstelle empfangenen zweiten simulierten Sensordaten. Mit Hilfe der Trainingsvorrichtung lässt sich das statistische Modell an veränderliche Bedingungen, was das Antwortverhalten der Sensoren und die Umweltbedingungen betrifft, anpassen.

Bei dem erfindungsgemäßen Verfahren zum Simulieren von Sensordaten unter Anwendung der erfindungsgemäßen Sensordaten-Simulationsvorrichtung werden erste simulierte Sensordaten auf Basis eines physikalischen Modells erzeugt.

Es werden zudem zweite simulierte Sensordaten auf Basis des trainierten statistischen Modells erzeugt. Das trainierte statistische Modell wurde in einem vorhergehenden Trainingsprozess durch Trainieren mit echten Sensordaten gewonnen und gibt das zeitabhängige statistische Verhalten der echten Sensordaten wieder. Das erfindungsgemäße Verfahren teilt die Vorteile der erfindungsgemäßen Sensordaten-Simulationsvorrichtung.

Bei dem erfindungsgemäßen Trainingsverfahren zum Trainieren der erfindungsgemäßen Sensordaten-Simulationsvorrichtung werden erste simulierte Sensordaten auf Basis des physikalischen Modells erzeugt. Es wird weiterhin ein statistisches Modell mit echten Sensordaten trainiert. Überdies werden zweite simulierte Sensordaten mit dem trainierten statistischen Modell erzeugt.

Teile der erfindungsgemäßen Sensordaten-Simulationsvorrichtung und der Trainingsvorrichtung können zum überwiegenden Teil in Form von Softwarekomponenten ausgebildet sein. Dies betrifft insbesondere Teile der Physik-Engine, der statistischen Modelleinheit und der Modelltrainingseinheit. Grundsätzlich können diese Komponenten aber auch zum Teil, insbesondere wenn es um besonders schnelle Berechnungen geht, in Form von softwareunterstützter Hardware, beispielsweise FPGAs oder dergleichen, realisiert sein. Ebenso können die benötigten Schnittstellen, beispielsweise wenn es nur um eine Übernahme von Daten aus anderen Softwarekomponenten geht als Softwareschnittstellen ausgebildet sein. Sie können aber auch als hardwaremäßig aufgebaute Schnittstellen ausgebildet sein, die durch geeignete Software angesteuert werden.

Eine teilweise softwaremäßige Realisierung hat den Vorteil, dass auch schon bisher für Sensordatensimulation genutzte Rechnersysteme auf einfache Weise durch ein Software-Update nachgerüstet werden können, um auf die erfindungsgemäße Weise zu arbeiten. Insofern wird die Aufgabe auch durch ein entsprechendes Computerprogrammprodukt mit einem Computerprogramm gelöst, welches direkt in eine Speichereinrichtung eines solchen Rechnersystems ladbar ist, mit Programmabschnitten, um alle Schritte des Verfahrens zum Simulieren von Sensordaten und/oder des Trainingsverfahrens zum Trainieren der erfindungsgemäßen Sensordaten-Simulationsvorrichtung auszuführen, wenn das Computerprogramm in dem Rechnersystem ausgeführt wird.

Ein solches Computerprogrammprodukt kann neben dem Computerprogramm gegebenenfalls zusätzliche Bestandteile, wie z.B. eine Dokumentation und/oder zusätzliche Komponenten, auch Hardware-Komponenten, wie z.B. Hardware-Schlüssel (Dongles etc.) zur Nutzung der Software, umfassen

Zum Transport zur Speichereinrichtung des Rechnersystems und/oder zur Speicherung an dem Rechnersystem kann ein computerlesbares Medium, beispielsweise ein Memorystick, eine Festplatte oder ein sonstiger transportabler oder fest eingebauter Datenträger dienen, auf welchem die von einer Rechnereinheit einlesbaren und ausführbaren Programmabschnitte des Computerprogramms gespeichert sind. Die Rechnereinheit kann z.B. hierzu einen oder mehrere zusammenarbeitende Mikroprozessoren oder dergleichen aufweisen.

Die abhängigen Ansprüche sowie die nachfolgende Beschreibung enthalten jeweils besonders vorteilhafte Ausgestaltungen und Weiterbildungen der Erfindung. Dabei können insbesondere die Ansprüche einer Anspruchskategorie auch analog zu den abhängigen Ansprüchen einer anderen Anspruchskategorie und deren Beschreibungsteilen weitergebildet sein. Zudem können im Rahmen der Erfindung auch die verschiedenen Merkmale unterschiedlicher Ausführungsbeispiele und Ansprüche auch zu neuen Ausführungsbeispielen kombiniert werden.

In einer bevorzugten Ausgestaltung der erfindungsgemäßen Sensordaten-Simulationsvorrichtung gibt das trainierte statistische Modell das dynamische Verhalten des Sensors wieder, dessen echte Sensordaten dazu genutzt wurden, das statistische Modell zu trainieren. Indem das zeitabhängige statistisch beschreibbare Verhalten des Sensors mitberücksichtigt wird, ergeben sich realistischer simulierte Sensordaten im Vergleich zu herkömmlich durch eine Physik-Engine simulierten Sensordaten.

In einer Ausgestaltung der erfindungsgemäßen Sensordaten-Simulationsvorrichtung simuliert das statistische Modell das Rauschverhalten des Sensors und/oder Artefakte, welche durch den Sensor erzeugt wurden, dessen echte Sensordaten dazu genutzt wurden, das statistische Modell zu trainieren. Vorteilhaft kann das tatsächliche Antwortverhalten eines Sensors besonders exakt simuliert werden.

In einer effektiven Ausgestaltung der erfindungsgemäßen Sensordaten-Simulationsvorrichtung berücksichtigt das physikalische Modell bei dem Trainieren des statistischen Modells gesammelte Metadaten, welche die Umweltbedingungen bei der Erzeugung der echten Sensordaten betreffen, bei dem Erzeugen der ersten simulierten Sensordaten. Vorteilhaft kann das physikalische Modell in Kenntnis spezifischer Werte der Metadaten präziser gestaltet werden.

In einer vorteilhaften Variante der erfindungsgemäßen Sensordaten-Simulationsvorrichtung wurde das trainierte statistische Modell durch Trainieren von echten Sensordaten, denen unterschiedliche Werte von Metadaten zugeordnet sind, erzeugt. Vorteilhaft können auch bei dem Trainieren des statistischen Modells Werte von Metadaten berücksichtigt werden, so dass das statistische Modell noch präziser gestaltet werden kann und besonders realistische simulierte zweite Sensordaten erzeugt werden können.

In einer Variante der erfindungsgemäßen Sensordaten-Simulationsvorrichtung umfassen die Metadaten mindesten eine der folgenden Datenarten:
- Wetterdaten,
- die Tageszeit,
- physikalische Randbedingungen,
- den Sensorzustand
- den Typ des Schienenfahrzeugs,
- Reisemetadaten.

Der Sensorzustand soll in diesem Zusammenhang den aktuellen physikalischen Zustand des Sensors umfassen, welcher zum Beispiel die Versorgungsspannung, die Stromstärke und die Sensortemperatur umfasst. Der Sensorzustand umfasst auch unterschiedliche Modi, in denen ein Sensor betrieben werden kann. Die Reisemetadaten umfassen den Abfahrtsort, den Ankunftsort sowie die Fahrplandaten.

Die genannten Informationen beeinflussen das Antwortverhalten eines Sensors. Es ist somit vorteilhaft, diese Daten bei der Erzeugung von simulierten Sensordaten mit zu berücksichtigen, um eine differenziertere, der Realität besser angepasste Simulation zu erreichen.

Teil der erfindungsgemäßen Trainingsvorrichtung sind vorzugsweise auch eine zweite Schnittstelle zum Empfangen von kombinierten Sensordaten und eine dritte Schnittstelle zu einer Physik-Engine zum Erzeugen von ersten simulierten Sensordaten zum Trainieren eines Kombinationsmodells. Die erfindungsgemäße Trainingsvorrichtung weist überdies vorzugsweise eine Kombinations-Modelltrainingseinheit zum Trainieren des Kombinationsmodells auf Basis von echten Sensordaten und der simulierten ersten und zweiten Sensordaten auf. Die beiden Modelle, d.h. das statistische Modell und das Kombinationsmodell können gemeinsam miteinander simultan trainiert werden, sie können aber auch unabhängig voneinander trainiert werden. Vorteilhaft ist der Kombinationsalgorithmus der auf Basis unterschiedlicher Modelle erzeugten simulierten Sensordaten durch die Kombinations-Modelltrainingseinheit an spezifische Bedingungen anpassbar.

In einer besonders bevorzugten Variante weist die Sensordaten-Simulationsvorrichtung die erfindungsgemäße Trainingsvorrichtung auf. Vorteilhaft lassen sich Teile der Sensordaten-Simulationsvorrichtung, wie zum Beispiel die Physik-Engine, die statistische Modelleinheit und die Fusionseinheit, auch für den Trainingsvorgang nutzen, so dass bei einem direkten Zusammenwirken der beiden erfindungsgemäßen Vorrichtungen diese Elemente nur einmal benötigt werden.

Überdies wird vorzugsweise im Rahmen des erfindungsgemäßen Verfahrens zum Simulieren von Sensordaten unter Anwendung der erfindungsgemäßen Sensordateneinrichtung ein Satz von kombinierten simulierten Sensordaten durch Kombination der ersten simulierten Sensordaten mit den zweiten simulierten Sensordaten unter Anwendung des trainierten Kombinationsmodells auf die ersten simulierten Sensordaten und die zweiten simulierten Sensordaten gewonnen. Das trainierte Kombinationsmodell wurde in einem vorhergehenden Trainingsprozess durch Trainieren mit echten Sensordaten und simulierten ersten und zweiten Sensordaten gewonnen. Vorteilhaft erfolgt auch der Kombinationsvorgang basierend auf einem trainierten Kombinationsmodell, welches individuell an unterschiedliche Trainingsdatensätze anpassbar ist.

In einer Variante des erfindungsgemäßen Trainingsverfahrens zum Trainieren der erfindungsgemäßen Sensordaten-Simulationsvorrichtung erfolgt ein Trainieren des Kombinationsmodells mit den echten Sensordaten und den simulierten ersten und zweiten Sensordaten. Vorteilhaft wird auch die Kombination der simulierten Sensordaten mit in den Trainingsprozess einbezogen, so dass besonders realitätsnahe Sensordaten simuliert werden können.

In einer besonders vorteilhaften Ausgestaltung des erfindungsgemäßen Trainingsverfahrens wird eine der folgenden Verfahrensarten genutzt:
- ein maschinelles Lernverfahren,
- ein Deep-Learning-Verfahren.

Ein maschinelles Lernverfahren lässt sich im Gegensatz zu einem starren Modell deutlich flexibler und präziser an Szenarien anpassen, die entweder nur unzureichend, mit hohem Aufwand oder gar nicht durch ein physikalisches Modell beschreibbar sind.

In einer Ausgestaltung des erfindungsgemäßen Trainingsverfahrens wird bei dem Schritt des Trainierens des statistischen Modells eine statistische Komponente jeweils aus den echten Sensordaten extrahiert und es erfolgt das Trainieren eines sequentiellen statistischen Modells auf Basis der statistischen Komponente, wobei das zeitabhängige Verhalten der statistischen Komponente gelernt wird. Diese Vorgehensweise ist besonders effektiv, wenn ein Rauschverhalten oder Artefaktverhalten eines Sensors beschrieben werden soll.

Ein sequentielles statistisches Modell dient dazu, Sequenzen von Ereignissen zu modellieren. Beispiele hierfür sind das Hidden-Markov-Modell oder rekurrente neuronale Netzwerke.

In einer vorteilhaften Ausgestaltung des erfindungsgemäßen Trainingsverfahrens erfolgt das Extrahieren der statistischen Komponente durch Anwenden einer zeitlichen Ableitung und/oder eines Hochpassfilters auf die echten Sensordaten. Mit Hilfe der beschriebenen Vorgehensweise lassen sich Rauschkomponenten von Sensordaten separieren.

In einer speziellen Variante des erfindungsgemäßen Trainingsverfahrens umfasst das sequentielle statistische Modell die Technik des langen Kurzzeitgedächtnisses (im Englischen als "long short term memory" bezeichnet, abgekürzt LSTM).

Die Erfindung wird im Folgenden unter Hinweis auf die beigefügten Figuren anhand von Ausführungsbeispielen noch einmal näher erläutert. Es zeigen:
- FIG 1: eine schematische Darstellung einer Sensordaten-Simulationsvorrichtung gemäß einem Ausführungsbeispiel der Erfindung,
- FIG 2: ein Flussdiagramm, welches ein Verfahren zum Simulieren von Sensordaten gemäß einem Ausführungsbeispiel der Erfindung veranschaulicht,
- FIG 3: ein Flussdiagramm, welches ein Trainingsverfahren zum Trainieren der in dem in FIG 2 veranschaulichten Verfahren genutzten Modelle gemäß einem Ausführungsbeispiel der Erfindung veranschaulicht,
- FIG 4: ein Flussdiagramm, welches ein Trainingsverfahren gemäß einem Ausführungsbeispiel der Erfindung darstellt.

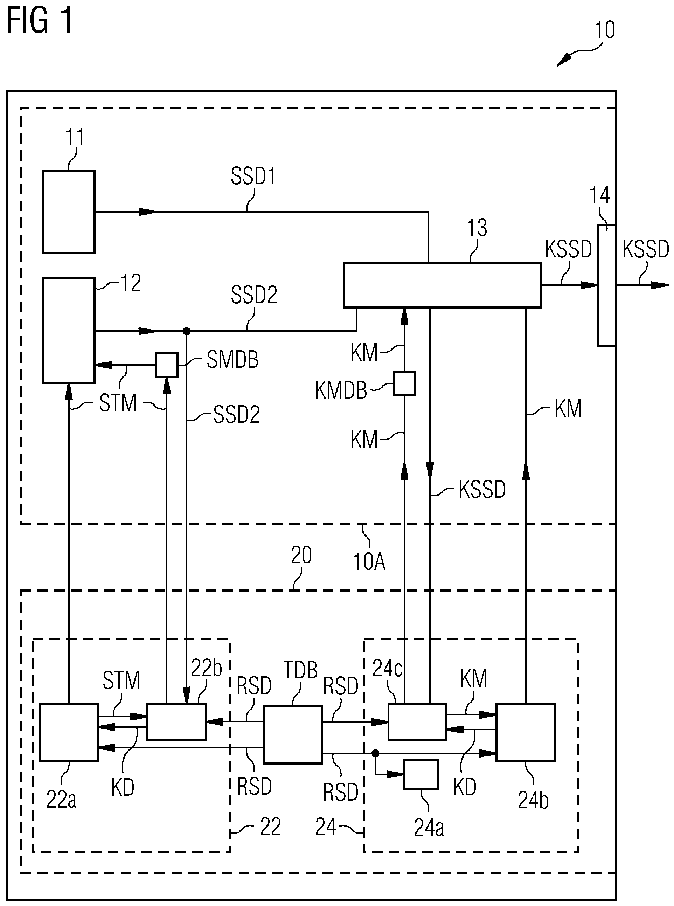

In FIG 1 ist eine Sensordaten-Simulationsvorrichtung 10 gemäß einem Ausführungsbeispiel der Erfindung schematisch dargestellt. Die Sensordaten-Simulationseinrichtung 10 weist eine Simulationskomponente 10a und eine Trainingsvorrichtung 20 auf. Mit der Simulationskomponente 10a wird eine modellhafte Simulation von Sensordaten KSSD durchgeführt. Dagegen dient die Trainingsvorrichtung 20 dem Erzeugen von auf einem maschinellen Lernverfahren basierenden Modellen STM, KM auf Basis von echten Sensordaten RSD. Die erzeugten Modelle STM, KM, ein statistisches Modell STM und ein Kombinationsmodell KM, werden zur Erzeugung simulierter Sensordaten SSD2, KSSD für spezifische Sensoren genutzt und werden nach ihrer Erzeugung durch die Trainingsvorrichtung 20 in einer SensormodellDatenbank SMDB bzw. in einer Kombinationsmodelldatenbank KMDB abgespeichert, die jeweils Teil der Simulationskomponente 10a sind.

Die Simulationskomponente 10a umfasst eine Physik-Engine 11, die dazu eingerichtet ist, erste simulierte Sensordaten SSD1 auf Basis eines physikalischen Modells für einen spezifischen Sensor zu erzeugen. Teil der Simulationskomponente 10a ist auch eine statistische Modelleinheit 12, die dazu eingerichtet ist, zweite simulierte Sensordaten SSD2 auf Basis eines trainierten statistischen Modells STM zu erzeugen. Das trainierte statistische Modell, welches spezifisch für einen bestimmten Sensor ist, ist in der bereits genannten Sensormodelldatenbank SMDB abgespeichert und kann bei Bedarf, d.h., wenn eine Sensordatensimulation für einen spezifischen Sensor durchgeführt werden soll, aus dieser Sensormodelldatenbank SMDB an die statistische Modelleinheit 12 übermittelt werden. Das statistische Modell STM wurde durch Trainieren mit echten Sensordaten RSD eines jeweiligen Sensors gewonnen und gibt das zeitabhängige statistische Verhalten der echten Sensordaten wieder. Teil der Simulationskomponente 10a ist auch eine Fusionseinheit 13, die mit der Physik-Engine 11 und der statistischen Modelleinheit 12 über Kommunikationskanäle verbunden ist und von diesen die ersten simulierten Sensordaten SSD1 und die zweiten simulierten Sensordaten SSD2, welche beispielsweise simulierte Rauschkomponenten oder simulierte Artefakte umfassen, empfängt. Die Fusionseinheit 13 ist dazu eingerichtet, einen Satz von kombinierten simulierten Sensordaten KSSD durch Kombination der ersten simulierten Sensordaten SSD1 mit den zweiten simulierten Sensordaten SSD2 zu erzeugen. Der Kombinationsvorgang findet unter Anwendung eines durch ein maschinelles Lernverfahren trainierten Kombinationsmodells KM auf die ersten simulierten Sensordaten SSD1 und die zweiten simulierten Sensordaten SSD2. Das dabei verwendete trainierte Kombinationsmodell KM wurde mit Hilfe der Trainingsvorrichtung 20 durch Trainieren mit echten Sensordaten RSD und simulierten ersten und zweiten Sensordaten SSD1, SSD2 gewonnen. Die erzeugten kombinierten simulierten Sensordaten KSSD können über eine Ausgangsschnittstelle 14, die ebenfalls Teil der Simulationskomponente 10a ist, ausgegeben werden. Es wird ausdrücklich erwähnt, dass die Fusionseinheit 13 ein optionales Merkmal darstellt und auch Ausführungsformen ohne eine Fusionseinheit 13 sinnvoll und ausführbar sind.

Die Trainingsvorrichtung 20 weist eine statistische Modelltrainingseinheit 22 und eine Kombinations-Modelltrainingseinheit 24 auf. Die Modelltrainingseinheit 22 dient dazu, ein statistisches Modell STM für einen bestimmten Sensor mit echten Sensordaten RSD mit Hilfe eines maschinellen Lernverfahrens zu trainieren. Hierzu weist die statistische Modelltrainingseinheit 22 eine Modellanpassungseinheit 22a und eine Vergleichseinheit 22b auf. Im Rahmen des Trainingsvorgangs erzeugt die Modellanpassungseinheit 22a zunächst ein initiales Modell STM eines spezifischen Sensors bzw. dessen Verhaltens und übermittelt dieses Modell STM an die bereits erwähnte statistische Modelleinheit 12, welche auf Basis des erhaltenen Modells STM zweite simulierte Sensordaten SSD2 erzeugt, und auch an die Vergleichseinheit 22b.

Die zweiten simulierten Sensordaten SSD2 werden im Rahmen des maschinellen Lernprozesses an die Vergleichseinheit 22b übermittelt, welche einen sogenannten Matching-Prozess durchführt, bei dem mit Rauschkomponenten STK behaftete echte Sensordaten RSD, welche in der Test-Datenbank TDB abgespeichert sind, mit den erzeugten zweiten simulierten Sensordaten SSD2 abgeglichen werden. Falls bei dem Matching-Prozess ermittelt wurde, dass die erzeugten Sensordaten SSD2 ausreichend mit den echten Sensordaten RSD übereinstimmen bzw. der Matching-Prozess ein positives Ergebnis aufweist, so wird das zuletzt an die Vergleichseinheit 22b übermittelte statistische Modell STM in der Sensormodelldatenbank SMDB abgespeichert. Andernfalls werden in Abhängigkeit von dem Ergebnis des Matching-Prozesses Korrekturparameter KD an die Modellanpassungseinheit 22a übermittelt. Die Modellanpassungseinheit 22a erzeugt darauf in Abhängigkeit von den erhaltenen Korrekturparametern KD ein korrigiertes statistisches Modell STM und übermittelt dieses Modell STM wiederum an die statistische Modelleinheit 12 sowie an die Vergleichseinheit 22b. Die statistische Modelleinheit 12 erzeugt darauf erneut zweite simulierte Sensordaten SSD2, welche wiederum von der Vergleichseinheit 22b einem Matching-Prozess mit den echten Sensordaten RSD unterzogen werden. Der beschriebene Prozess wird weiter durchgeführt, bis das Ergebnis des Matching-Prozesses keine weiteren Korrekturen mehr nötig macht. Anschließend wird das zuletzt genutzte statistische Modell STM in der Sensormodelldatenbank SMDB abgespeichert.

Die Kombinations-Modelltrainingseinheit 24 weist eine Initialisierungseinheit 24a auf, mit der in Abhängigkeit von der Testdatenbank TDB empfangenen echten Sensordaten RSD für einen spezifischen Sensor eine Erzeugung von ersten simulierten Sensordaten SSD1 in der Physik-Engine 11 angewiesen wird und eine Simulation von zweiten simulierten Sensordaten SSD2 in der statistischen Modelleinheit 12 angewiesen wird (Kommunikationsleitungen zwischen der Initialisierungseinheit 24a und der Physik-Engine 11 sowie der statistischen Modelleinheit 12 sind der Übersichtlichkeit nicht gezeigt). Weiterhin weist die Kombinations-Modelltrainingseinheit 24 eine Modellanpassungseinheit 24b auf, die auf Basis von echten Sensordaten RSD, welche sie von der Testdatenbank TDB erhält, ein initiales Kombinationsmodell KM an die Kombinationseinheit 13 übermittelt. Die Kombinationseinheit 13 kombiniert die zu Trainingszwecken erzeugten ersten und zweiten simulierten Sensordaten SSD1, SSD2 miteinander und übermittelt die kombinierten simulierten Sensordaten KSSD an eine Vergleichseinheit 24c, die ebenfalls Teil der Kombinations-Modelltrainingseinheit 24 ist.

Die kombinierten simulierten Sensordaten KSSD werden im Rahmen des maschinellen Lernprozesses an die Vergleichseinheit 24c übermittelt, welche einen sogenannten Matching-Prozess durchführt, bei dem echte Sensordaten RSD, welche in der Test-Datenbank TDB abgespeichert sind, mit den erzeugten kombinierten simulierten Sensordaten KSSD abgeglichen werden. Falls bei dem Matching-Prozess ermittelt wurde, dass die erzeugten kombinierten simulierten Sensordaten KSSD ausreichend mit den echten Sensordaten RSD übereinstimmen bzw. der Matching-Prozess ein positives Ergebnis aufweist, so wird das zuletzt an die Vergleichseinheit 24c übermittelte statistische Modell STM in der bereits erwähnten Kombinationsmodelldatenbank KMDB abgespeichert.

Andernfalls werden in Abhängigkeit von dem Ergebnis des Matching-Prozesses Korrekturparameter KD an die Modellanpassungseinheit 24b übermittelt. Die Modellanpassungseinheit 24b erzeugt darauf in Abhängigkeit von den erhaltenen Korrekturparametern KD ein korrigiertes Kombinationsmodell KM und übermittelt dieses Modell KM wiederum an die Kombinationsmodelleinheit 13 sowie an die Vergleichseinheit 24c. Die Kombinationsmodelleinheit 13 erzeugt darauf erneut kombinierte simulierte Sensordaten KSSD, welche wiederum von der Vergleichseinheit 24b einem Matching-Prozess mit den echten Sensordaten RSD unterzogen werden. Der beschriebene Prozess wird weiter durchgeführt, bis das Ergebnis des Matching-Prozesses keine weiteren Korrekturen mehr nötig macht. Anschließend wird das zuletzt genutzte Kombinationsmodell KM in der Kombinationsmodelldatenbank KMDB abgespeichert, in der es für Simulationen zur Verfügung steht.

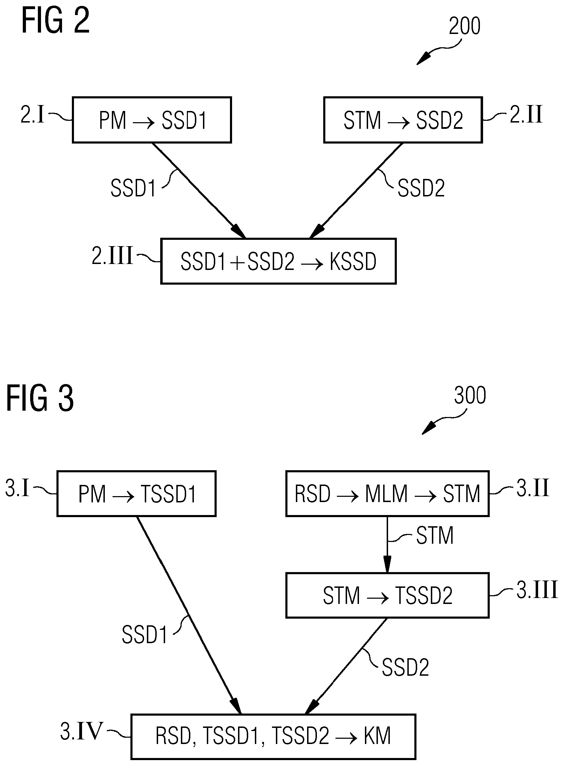

In FIG 2 ist ein Flussdiagramm 200 gezeigt, welches ein Verfahren zum Simulieren von Sensordaten gemäß einem Ausführungsbeispiel der Erfindung veranschaulicht.

Bei dem Schritt 2.I werden mit Hilfe einer Physik-Engine für definierte Sensor-Parameter und Umwelt-Parameter eine Vielzahl von ersten simulierten Sensordaten SSD1 erzeugt. Zusätzlich werden bei dem Schritt 2.II von einem statistischen Modell STM, welches durch ein maschinelles Lernverfahren trainiert wurde, eine Vielzahl von zweiten simulierten Sensordaten SSD2 für dieselben definierten Sensor-Parameter und Umwelt-Parameter erzeugt, die auch bei dem Schritt 2.I verwendet wurden. Das statistische Modell STM wurde durch maschinelles Lernen mit echten Sensordaten RSD bzw. auf diesen basierenden statistischen Komponenten gewonnen. Die zweiten simulierten Sensordaten SSD2 können zum Beispiel eine statistische Komponente umfassen, wie zum Beispiel Rauscheffekte oder Artefakte, welche durch Umwelteinflüsse oder bauartbedingt auftreten können. Anstatt vollständiger zweiter simulierter Sensordaten SSD2 können auch nur die diesen zugeordneten statistischen Komponenten erzeugt werden.

Schließlich werden bei dem Schritt 2.III die ersten und zweiten simulierten Sensordaten SSD1, SSD2 dazu genutzt, einen Satz von kombinierten simulierten Sensordaten KSSD zu erzeugen. Der Satz von kombinierten simulierten Sensordaten KSSD wird durch Kombination der ersten simulierten Sensordaten SSD1 mit den zweiten simulierten Sensordaten SSD2 erreicht. Die Kombination erfolgt durch Anwenden eines durch maschinelles Lernen trainierten Kombinationsmodells KM, welches dazu trainiert wurde, die ersten und zweiten Sensordaten SSD1, SSD2 derart miteinander zu kombinieren, dass die bei der Kombination erzeugten kombinierten simulierten Sensordaten KSSD, möglichst exakt den für das Training genutzten echten Sensordaten RSD entsprechen. Es werden also maschinelle Lernverfahren sowohl für das Erzeugen statistischer Komponenten von simulierten Sensordaten genutzt als auch zusätzlich für die Kombination dieser simulierten statistischen Komponenten mit simulierten Sensordaten, welche durch ein physikalisches Modell erzeugt wurden. Durch die Berücksichtigung der statistischen Daten wird eine exaktere und naturgetreuere Simulation von Sensordaten erreicht.

In FIG 3 ist ein Flussdiagramm 300 gezeigt, welches ein Trainingsverfahren zum Trainieren einer Sensordaten-Simulationsvorrichtung gemäß einem Ausführungsbeispiel der Erfindung veranschaulicht. Bei dem in FIG 3 veranschaulichten Verfahren werden bei dem Schritt 3.I zunächst mit einem physikalischen Modell PM, welches durch eine Physik-Engine realisiert wird, erste statistische Sensordaten SSD1 für bestimmte definierte Umwelt-Parameter und Sensor-Parameter erzeugt, wobei die entsprechenden Parameter bzw. deren Werte variiert werden, um simulierte Sensorwerte für einen entsprechend breiten Parameterbereich zu erhalten. Der Parameterbereich hängt unter anderem von den vorhandenen echten Sensordaten RSD ab bzw. von dem diesen zugeordneten Parameterwertebereich.

Bei dem Schritt 3.II wird ein dynamisches statistisches Modell STM durch maschinelles Lernen MLM anhand von echten Sensordaten RSD trainiert. Die echten Sensordaten RSD können zum Beispiel aus einer Testdatenbank TDB (siehe FIG 1) stammen. Die echten Sensordaten RSD können beispielsweise statistische, d.h. über die Zeit statistisch variierende Komponenten aufweisen, die zum Trainieren des dynamischen statistischen Modells STM genutzt werden. Die statistischen Komponenten können zum Beispiel das Rauschverhalten der simulierten Sensordaten betreffen.

Bei dem Schritt 3.III werden anschließend mit Hilfe des trainierten statistischen Modells STM zweite simulierte Sensordaten SSD2 erzeugt. Die zweiten simulierten Sensordaten SSD2 umfassen die beschriebene statistische Komponente von Sensordaten.

Bei dem Schritt 3.IV erfolgt dann ein Trainieren eines Kombinationsmodells KM. Das Kombinationsmodell KM soll dazu dienen, die über das physikalische Modell simulierten ersten Sensordaten SSD1 und die mit dem statistischen Modell STM simulierten zweiten Sensordaten SSD2 geeignet zu kombinieren, d.h. derart zu kombinieren, dass die durch das Kombinationsmodell KM erzeugten kombinierten Sensordaten KSSD den für das Training genutzten echten Sensordaten RSD entsprechen, und zwar für die diesen zugeordneten spezifischen Parameterwerte.

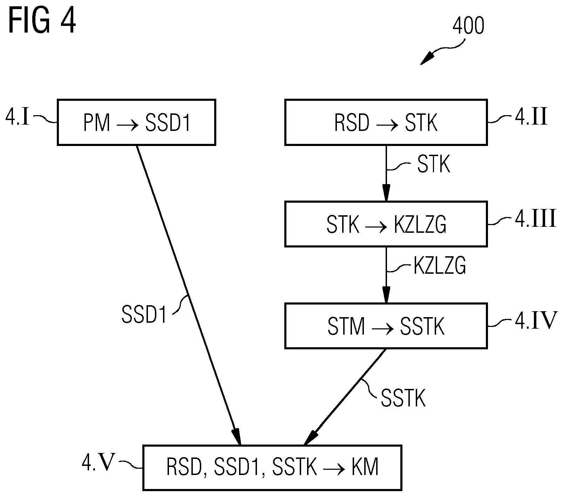

In FIG 4 ist ein Flussdiagramm 400 gezeigt, welches ein Trainingsverfahren zum Trainieren von Modellen zum Simulieren von Sensordaten gemäß einem zweiten Ausführungsbeispiel der Erfindung veranschaulicht. Bei dem Schritt 4.I werden ebenso wie in dem in FIG 3 veranschaulichten Ausführungsbeispiel erste simulierte Sensordaten SSD1 mit Hilfe einer Physik-Engine bzw. eines von der Physik-Engine realisierten physikalischen Modells PM erzeugt. Anders als bei dem in FIG 3 veranschaulichten Ausführungsbeispiel werden bei dem Schritt 4.II aus den echten Sensordaten RSD Rauschkomponenten STK extrahiert. Das Extrahieren dieser Rauschkomponenten STK erfolgt in dem in FIG 4 gezeigten Ausführungsbeispiel durch Anwendung eines Hochpassfilters auf die dem Trainingsvorgang zugrunde gelegten echten Sensordaten RSD. Die Rauschkomponenten STK werden dann bei dem Schritt 4.III mit Hilfe eines sequentiellen statistischen Modells prozessiert, in diesem Fall ist es ein als "Kurzzeitlangzeitgedächtnis" KZLZG bezeichnetes Modell, mit dem das Rauschverhalten der Sensordaten RSD in Abhängigkeit von der Zeit maschinell gelernt wird. Nachdem bei dem Schritt 4.III das "Kurzzeitlangzeitgedächtnis" KZLZG mit Rauschkomponenten STK ausreichend trainiert wurde, kann es dann bei dem Schritt 4.IV dazu genutzt werden, simulierte Rauschkomponenten SSTK, als Zeitserien zu erzeugen. Diese simulierten Rauschkomponenten SSTK werden anschließend bei dem Schritt 4.V gemeinsam mit den ersten simulierten Sensordaten SSD1 sowie den echten Sensordaten RSD dazu genutzt, ein Kombinationsmodell KM maschinell zu lernen. Das Kombinationsmodell KM soll dazu dienen, die über das physikalische Modell PM simulierten ersten Sensordaten SSD1 und die mit dem als "Kurzzeitlangzeitgedächtnis" KZLZG bezeichneten statistischen Modell simulierten Rauschkomponenten SSTK geeignet zu kombinieren, d.h. derart zu kombinieren, dass die durch das Kombinationsmodell KM erzeugten kombinierten Sensordaten KSSD den für das Training genutzten echten Sensordaten RSD für die diesen zugeordneten Parameterwerte entsprechen.

Es wird abschließend noch einmal darauf hingewiesen, dass es sich bei den vorbeschriebenen Verfahren und Vorrichtungen lediglich um bevorzugte Ausführungsbeispiele der Erfindung handelt und dass die Erfindung vom Fachmann variiert werden kann, ohne den Bereich der Erfindung zu verlassen, soweit er durch die Ansprüche vorgegeben ist.

## Patentansprüche

1. Sensordaten-Simulationsvorrichtung (10), aufweisend:
- eine Physik-Engine (41) zum Erzeugen von ersten simulierten Sensordaten (SSD1) auf Basis eines physikalischen Modells (PM),
- eine statistische Modelleinheit (42) zum Erzeugen von zweiten simulierten Sensordaten (SSD2, SSTK) auf Basis eines trainierten statistischen Modells (STM), welches durch Trainieren mit echten Sensordaten (RSD) gewonnen wurde und dazu eingerichtet ist, ein zeitabhängiges statistisches Verhalten der echten Sensordaten (RSD) wiederzugeben,
- **gekennzeichnet durch** eine Fusionseinheit (43) zum Erzeugen eines Satzes von kombinierten simulierten Sensordaten (KSSD) durch Kombination der ersten simulierten Sensordaten (SSD1) mit den zweiten simulierten Sensordaten (SSD2, SSTK) unter Anwendung eines trainierten Kombinationsmodells (KM) auf die ersten simulierten Sensordaten (SSD1) und die zweiten simulierten Sensordaten (SSD2, SSTK), wobei das trainierte Kombinationsmodell (KM) durch Trainieren mit echten Sensordaten (RSD) und simulierten ersten und zweiten Sensordaten (SSD1, SSD2, SSTK) gewonnen wurde.

2. Sensordaten-Simulationsvorrichtung nach Anspruch 1, wobei das trainierte statistische Modell (STM) das dynamische Verhalten eines Sensors wiedergibt, dessen echte Sensordaten (RSD) dazu genutzt wurden, das statistische Modell (STM) zu trainieren.

3. Sensordaten-Simulationsvorrichtung nach einem der vorstehenden Ansprüche, wobei das statistische Modell (STM) das Rauschverhalten eines Sensors und/oder von dem Sensor erzeugte Artefakte simuliert, dessen echte Sensordaten (RSD) dazu genutzt wurden, das statistische Modell (STM) zu trainieren.

4. Sensordaten-Simulationsvorrichtung nach einem der vorstehenden Ansprüche, wobei das physikalische Modell (PM) dazu eingerichtet ist, bei dem Trainieren des statistischen Modells (STM) gesammelte Metadaten, welche die Umweltbedingungen bei der Erzeugung der echten Sensordaten (RSD) betreffen, bei dem Erzeugen der ersten simulierten Sensordaten (SSD1) zu berücksichtigen.

5. Sensordaten-Simulationsvorrichtung nach einem der vorstehenden Ansprüche, wobei das trainierte statistische Modell (STM) durch Trainieren von echten Sensordaten (RSD), denen unterschiedliche Werte von Metadaten zugeordnet sind, erzeugt wurde.

6. Sensordaten-Simulationsvorrichtung nach Anspruch 5, wobei die Metadaten mindestens eine der folgenden Datenarten umfassen:
- Wetterdaten,
- Tageszeit,
- physikalische Randbedingungen.

7. Trainingsvorrichtung (20), aufweisend:
- eine erste Schnittstelle zum Empfangen von zweiten simulierten Sensordaten (SSD2, SSTK), welche mit einem zu trainierenden statistischen Modell (STM) erzeugt werden,
- eine Modelltrainingseinheit (22) zum Trainieren des statistischen Modells (STM) mit echten Sensordaten (RSD) und den über die erste Schnittstelle empfangenen zweiten simulierten Sensordaten (SSD2, SSTK),
- **gekennzeichnet durch** eine zweite Schnittstelle zum Empfangen von kombinierten Sensordaten (KSSD),
- eine dritte Schnittstelle zu einer Physik-Engine (41) zum Erzeugen von ersten simulierten Sensordaten (SSD1) zum Trainieren eines Kombinationsmodells (KM),
- eine Kombinations-Modelltrainingseinheit (24) zum Trainieren des Kombinationsmodells (KM) auf Basis von echten Sensordaten (RSD) und der simulierten ersten und zweiten Sensordaten (SSD1, SSD2, SSTK).

8. Sensordaten-Simulationsvorrichtung (10) nach einem der Ansprüche 1 bis 6, aufweisend eine Trainingsvorrichtung (20) nach Anspruch 7.

9. Verfahren zum Simulieren von Sensordaten (KSSD) unter Anwendung der Sensordaten-Simulationsvorrichtung (10) nach einem der Ansprüche 1 bis 6 oder 8, **gekennzeichnet durch** die Schritte:
- Erzeugen von ersten simulierten Sensordaten (SSD1) auf Basis des physikalischen Modells (PM),
- Erzeugen von zweiten simulierten Sensordaten (SSD2, SSTK) auf Basis des trainierten statistischen Modells (STM) mit echten Sensordaten (RSD).

10. Verfahren nach Anspruch 9, wobei ein Satz von kombinierten simulierten Sensordaten (KSSD) durch Kombination der ersten simulierten Sensordaten (SSD1) mit den zweiten simulierten Sensordaten (SSD2, SSTK) unter Anwendung des trainierten Kombinationsmodells (KM) auf die ersten simulierten Sensordaten (SSD1) und die zweiten simulierten Sensordaten (SSD2, SSTK) erzeugt wird.

11. Trainingsverfahren zum Trainieren einer Sensordaten-Simulationsvorrichtung (10) nach einem der Ansprüche 1 bis 6 oder 8, **gekennzeichnet durch** die Schritte:
- Erzeugen von ersten simulierten Sensordaten (SSD1) auf Basis des physikalischen Modells (PM),
- Trainieren des statistischen Modells (STM) mit echten Sensordaten (RSD),
- Erzeugen von zweiten simulierten Sensordaten (SSD2, SSTK) mit dem trainierten statistischen Modell (STM).

12. Verfahren nach Anspruch 11, wobei
ein Kombinationsmodell (KM) mit den echten Sensordaten (RSD) und den simulierten ersten und zweiten Sensordaten (SSD1, SSD2, SSTK) trainiert wird.

13. Verfahren nach Anspruch 11 oder 12, wobei als Trainingsverfahren eine der folgenden Verfahrensarten genutzt wird:
- ein maschinelles Lernverfahren,
- ein Deep-Learning-Verfahren.

14. Verfahren nach einem der Ansprüche 9 bis 13, wobei bei dem Schritt des Trainierens des statistischen Modells (STM)
- eine statistische Komponente (STK) jeweils aus den echten Sensordaten (RSD) extrahiert wird,
- das Trainieren eines sequentiellen statistischen Modells (SSTM) auf Basis der statistischen Komponente (STK) erfolgt, wobei das zeitabhängige Verhalten der statistischen Komponente (STK) gelernt wird.

15. Verfahren nach Anspruch 14, wobei das Extrahieren der statistischen Komponente (STK) durch Anwenden einer zeitlichen Ableitung und/oder eines Hochpassfilters auf die echten Sensordaten (RSD) erfolgt.

16. Verfahren nach Anspruch 14 oder 15, wobei das sequentielle statistische Modell (SSTM) die Technik des langen Kurzzeitgedächtnisses (KZLZG) umfasst.

17. Computerprogrammprodukt mit einem Computerprogramm, welches direkt in eine Speichereinheit einer Rechnereinheit ladbar ist, mit Programmabschnitten, um alle Schritte eines Verfahrens nach einem der Ansprüche 9 bis 16 auszuführen, wenn das Computerprogramm in der Rechnereinheit ausgeführt wird.

18. Computerlesbares Medium, auf welchem von einer Rechnereinheit ausführbare Programmabschnitte gespeichert sind, um alle Schritte des Verfahrens nach einem der Ansprüche 9 bis 16 auszuführen, wenn die Programmabschnitte von der Rechnereinheit ausgeführt werden.

## Claims

1. Sensor data simulation device (10), having:
- a physics engine (41) for generating first simulated sensor data (SSD1) on the basis of a physical model (PM),
- a statistical model unit (42) for generating second simulated sensor data (SSD2, SSTK) on the basis of a trained statistical model (STM), which has been obtained by training with real sensor data (RSD) and is designed to reproduce a time-dependent statistical behaviour of the real sensor data (RSD),
**characterised by**
a fusion unit (43) for generating a set of combined simulated sensor data (KSSD) by combining the first simulated sensor data (SSD1) with the second simulated sensor data (SSD2, SSTK) by applying a trained combination model (KM) to the first simulated sensor data (SSD1) and the second simulated sensor data (SSD2, SSTK), wherein the trained combination model (KM) has been obtained by training with real sensor data (RSD) and simulated first and second sensor data (SSD1, SSD2, SSTK).

2. Sensor data simulation device according to claim 1, wherein the trained statistical model (STM) reproduces the dynamic behaviour of a sensor, the real sensor data (RSD) of which has been used to train the statistical model (STM).

3. Sensor data simulation device according to one of the preceding claims, wherein the statistical model (STM) simulates the noise behaviour of a senior and/or artifacts generated by the sensor, the real sensor data (RSD) of which has been used to train the statistical model (STM).

4. Sensor data simulation device according to one of the preceding claims, wherein the physical model (PM) is designed to take into account metadata collected while the statistical model (STM) is trained, said metadata relating to the environmental conditions when the real sensor data (RSD) is generated, when the first simulated sensor data (SSD1) is generated.

5. Sensor data simulation device according to one of the preceding claims, wherein the trained statistical model (STM) has been generated by training real sensor data (RSD), to which different values of metadata are assigned.

6. Sensor data simulation device according to claim 5, wherein the metadata comprises at least one of the following types of data:
- weather data
- time of day
- physical boundary conditions.

7. Training device (20), having:
- a first interface for receiving second simulated sensor data (SSD2, SSTK), which is generated with a statistical model (STM) to be trained,
- a model training unit (22) for training the statistical model (STM) with real sensor data (RSD) and the second simulated sensor data (SSD2, SSTK) received by way of the first interface,
**characterised by**
- a second interface for receiving combined sensor data (KSSD),
- a third interface to a physics engine (41) for generating first simulated sensor data (SSD1) in order to train a combination model (KM),
- a combination model training unit (24) for training the combination model (KM) on the basis of real sensor data (RSD) and the simulated first and second sensor data (SSD1, SSD2, SSTK).

8. Sensor data simulation device (10) according to one of claims 1 to 6, having a training device (20) according to claim 7,

9. Method for simulating sensor data (KSSD) by applying the sensor data simulation device (10) according to one of claims 1 to 6 or 8, **characterised by** the steps:
- generating first simulated sensor data (SSD1) on the basis of the physical model (PM),
- generating second simulated sensor data (SSD2, SSTK) on the basis of the trained statistical model (STM) with real sensor data (RSD).

10. Method according to claim 9, wherein a set of combined simulated sensor data (KSSD) is generated by combining the first simulated sensor data (SSD1) with the second simulated sensor data (SSD2, SSTK) by applying the trained combination model (KM) to the first stimulated sensor data (SSD1) and the second simulated sensor data (SSD2, SSTK).

11. Training method for training a sensor data simulation device (10) according to one of claims 1 to 6 or 8, **characterised by** the steps:
- generating first simulated sensor data (SSD1) on the basis of the physical model (PM),
- training the statistical model (STM) with real sensor data (RSD),
- generating second simulated sensor data (SSD2, SSTK) with the trained statistical model (STM).

12. Method according to claim 11, wherein
a combination model (KM) is trained with the real sensor data (RSD) and the simulated first and second sensor data (SSD1, SSD2, SSTK).

13. Method according to claim 11 or 12, wherein one of the following method types is used as a training method:
- a machine learning method
- a deep-learning method.

14. Method according to one of claims 9 to 13, wherein with the step of training the statistical model (STM),
- a statistical component (STK) is extracted from the real sensor data (RSD) in each case,
- the training of a sequential statistical model (SSTM) is carried out on the basis of the statistical component (STK), wherein the time-dependent behaviour of the statistical component (STK) is learnt.

15. Method according to claim 14, wherein the extraction of the statistical component (STK) is carried out by applying a temporal derivative and/or a high-pass filter to the real sensor data (RSD).

16. Method according to claim 14 or 15, wherein the sequential statistical model (SSTM) comprises the technique of long short-term memory (KZLZG).

17. Computer program product with a computer program, which can be loaded directly into a storage unit of a computer unit, with program sections in order to carry out all steps of a method according to one of claims 9 to 16, when the computer program is executed in the computer unit.

18. Computer-readable medium, upon which program sections which can be executed by a computer unit are stored, in order to carry out all steps of the method according to one of claims 9 to 16, when the program sections are executed by the computer unit.

## Revendications

1. Système (10) de simulation de données de capteur, comportant :
- un moteur (41) physique de production de premières données (SSD1) de capteur simulées sur la base d'un modèle (PM) physique,
- une unité (42) de modèle statistique de production de deuxièmes données (SSD2, SSTK) de capteur simulées sur la base d'un modèle (STM) statistique ayant subi un apprentissage, qui a été obtenu par apprentissage avec des données (RSD) de capteur réelles et qui est conçu pour reproduire un comportement statistique en fonction du temps des données (RSD) de capteur réelles,
- **caractérisé par** une unité (43) de fusion de production d'un ensemble de données (KSSD) de capteur simulées combinées par combinaison des premières données (SSD1) de capteur simulées aux deuxièmes données (SSD2, SSTK) de capteur simulées avec application d'un modèle (KM) de combinaison ayant subi un apprentissage aux premières données (SSD1) de capteur simulées et aux deuxièmes données (SSD2, SSTK) de capteur simulées, le modèle (KM) de combinaison ayant subi un apprentissage ayant été obtenu en faisant subir un apprentissage avec des données (RSD) de capteur réelles et des premières et deuxièmes données (SSD1, SSD2, SSTK) de capteur simulées.

2. Système de simulation de données de capteur suivant la revendication 1, dans lequel le modèle (STM) statistique ayant subi un apprentissage reproduit le comportement dynamique d'un capteur, dont les données (RSD) de capteur réelles ont été utilisées pour faire subir un apprentissage au modèle (STM) statistique.

3. Système de simulation de données de capteur suivant l'une des revendications précédentes, dans lequel le modèle (STM) statistique simule le comportement de bruit d'un capteur et/ou des artéfacts produits par le capteur, dont les données (RSD) de capteur réelles ont été utilisées pour faire subir un apprentissage au modèle (STM) statistique.

4. Système de simulation de données de capteur suivant l'une des revendications précédentes, dans lequel le modèle (PM) physique est conçu pour prendre en compte, lors de la production des premières données (SSD1) de capteur simulées, des métadonnées qui ont été rassemblées lors de l'apprentissage du modèle (STM) statistique et qui concernent les conditions amiantes lors de la production des données (RSD) de capteur réelles.

5. Système de simulation de données de capteur suivant l'une des revendications précédentes, dans lequel le modèle (STM) statistique ayant subi un apprentissage a été produit par apprentissage par des données (RSD) de capteur réelles, auxquelles des valeurs de métadonnées différentes sont associées.

6. Système de simulation de données de capteur suivant la revendication 5, dans lequel les métadonnées comprennent au moins l'un des types de données suivants :
- des données météorologiques,
- l'heure du jour,
- des conditions physiques aux limites.

7. Installation (20) d'apprentissage, comprenant :
- une première interface de réception de deuxièmes données (SSD2, SSTK) de capteur simulées, qui sont produites par un modèle (STM) statistique auquel on doit faire subir un apprentissage,
- une unité (22) d'apprentissage de modèle pour faire subir un apprentissage au modèle (STM) statistique par des données (RSD) de capteur réelles et par les deuxièmes données (SSD2, SSTK) de capteur simulées reçues par l'intermédiaire de la première interface,
- **caractérisée par** une deuxième interface de réception de données (KSSD) de capteur combinées,
- une troisième interface avec un moteur (41) physique pour produire des premières données (SSD1) de capteur simulées afin de faire subir un apprentissage à un modèle (KM) de combinaison,
- une unité (24) d'apprentissage de modèle de combinaison pour faire subir un apprentissage au modèle (KM) de combinaison sur la base de données (RSD) de capteur réelles et des premières et deuxièmes données (SSD1, SSD2, SSTK) de capteur simulées.

8. Système (10) de simulation de données de capteur suivant l'une des revendications 1 à 6, comportant un dispositif (20) d'apprentissage suivant la revendication 7.

9. Procédé de simulation de données (KSSD) de capteur en utilisant le dispositif (10) de simulation de données de capteur suivant l'une des revendications 1 à 6 ou 8, **caractérisé par** les stades :
- production de premières données (SSD1) de capteur simulées sur la base du modèle (PM) physique,
- production de deuxièmes données (SSD2, SSTK) de capteur simulées sur la base du modèle (STM) statistique ayant subi un apprentissage par des données (RSD) de capteur réelles.

10. Procédé suivant la revendication 9, dans lequel on produit un ensemble de données (KSSD) de capteur simulées combinées par combinaison des premières données (SSD1) de capteur simulées aux deuxièmes données (SSD2, SSTK) de capteur simulées, en appliquant le modèle (KM) de combinaison ayant subi un apprentissage aux premières données (SSD1) de capteur simulées et aux deuxièmes données (SSD2, SSTK) de capteur simulées.

11. Procédé d'apprentissage pour faire subir un apprentissage à un système (10) de simulation de données de capteur suivant l'une des revendications 1 à 6 ou 8, **caractérisé par** les stades :
- production de premières données (SSD1) de capteur simulées sur la base du modèle (PM) physique,
- apprentissage du modèle (STM) statistique par des données (RSD) de capteur réelles,
- production de deuxièmes données (SSD2, SSTK) de capteur simulées par le modèle (STM) statistique ayant subi un apprentissage.

12. Procédé suivant la revendication 11, dans lequel
on fait subir un apprentissage au modèle (KM) de combinaison par les données (RSD) de capteur réelles et par les premières et deuxièmes données (SSD1, SSD2, SSTK) de capteur simulées.

13. Procédé suivant la revendication 11 ou 12, dans lequel on utilise comme procédé d'apprentissage l'un des types de procédé suivants :
- un procédé d'apprentissage automatique,
- un procédé deep-learning.

14. Procédé suivant l'une des revendications 9 à 13, dans lequel dans le stade de l'apprentissage du modèle (STM) statistique
- on extrait une composante (STK) statistique respectivement des données (RSD) de capteur réelles,
- l'apprentissage d'un modèle (SSTM) statistique séquentiel s'effectue sur la base de la composante (STK) statistique, dans lequel on fait l'apprentissage du comportement en fonction du temps de la composante (STK) statistique.

15. Procédé suivant la revendication 14, dans lequel l'extraction de la composante (STK) statistique s'effectue par application d'une dérivée en fonction du temps et/ou d'un filtre passe-haut aux données (RSD) de capteur réelles.

16. Procédé suivant la revendication 14 ou 15, dans lequel le modèle (SSTM) statistique séquentiel comprend la technique de la mémoire longue de courte durée (KZLZG).

17. Produit de programme d'ordinateur ayant un programme d'ordinateur, qui peut être chargé directement dans une unité de mémoire d'une unité informatique, comprenant des parties de programme pour effectuer tous les stades d'un procédé suivant l'une des revendications 9 à 16, lorsque le programme d'ordinateur est réalisé dans l'unité informatique.

18. Support déchiffrable par ordinateur, sur lequel des parties de programme pouvant être réalisées par une unité informatique sont mises en mémoire, pour effectuer tous les stades du procédé suivant l'une des revendications 9 à 16 lorsque les parties de programme sont réalisées par l'unité informatique.
